Europäisches Patentamt

**European Patent Office**

Office européen des brevets

(11) Veröffentlichungsnummer: **0 206 223 B1**

(12) **EUROPÄISCHE PATENTSCHRIFT**

(51) Int. Cl.⁴: **G01P 3/36**

(45) Veröffentlichungstag der Patentschrift:
27.12.89

(21) Anmeldenummer: 86108248.5

(22) Anmeldetag: 17.06.86

(54) Einrichtung zur Messung der Drehgeschwindigkeit.

(30) Priorität: 22.06.85 DE 3522415

(43) Veröffentlichungstag der Anmeldung:
30.12.86 Patentblatt 86/52

(45) Bekanntmachung des Hinweises auf die Patenterteilung:
27.12.89 Patentblatt 89/52

(84) Benannte Vertragsstaaten:
DE FR GB

(56) Entgegenhaltungen:
DE-A- 3 136 688
DE-A- 3 340 809
US-A- 4 354 760

(73) Patentinhaber: Standard Elektrik Lorenz
Aktiengesellschaft, Lorenzstrasse 10,
D-7000 Stuttgart 40(DE)

(72) Erfinder: Ulrich, Reinhard Prof. Dr., Alte Rennbahn 2,
D-2110 Buchholz(DE)
Erfinder: Auch, Wilfried, Dr., Weimarstrasse 6,
D-7144 Asperg(DE)

(74) Vertreter: Schmidt, Werner, Dipl.-Phys. et al, Standard
Elektrik Lorenz AG Patent- und Lizenzwesen
Postfach 30 09 29, D-7000 Stuttgart 30(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung geht aus von einer Einrichtung zur Messung der Drehgeschwindigkeit wie im Oberbegriff des Anspruchs 1 angegeben. Eine solche Einrichtung ist aus der DE-OS 31 36 688 bekannt.

Bei der bekannten Einrichtung wird der Lichtstrahl frequenzverschoben. Als Frequenzverschiebungseinrichtung ist eine Bragg-Zelle geeignet. Wie der DE-OS 33 40 809 zu entnehmen ist, gibt es zur Erzeugung einer Frequenzverschiebung von $\Delta f = f_1 - f_2$ mehrere Möglichkeiten. Eine besteht darin, daß in einer ersten Bragg-Zelle die Frequenz $f_0$ des Lichtstrahls um $f_1$ verschoben wird. In einer zweiten Bragg-Zelle erfolgt dann eine Frequenzverschiebung um $-f_2$. Weiterhin ist es möglich, eine Braggzelle sowohl mit $f_1$ als auch mit $f_2$ anzusteuern. Wählt man die Ausbreitungsrichtung der Schallwellen in der Bragg-Zelle geeignet, dann erhält man einen Lichtstrahl mit der Frequenz $f_0 + f_1 - f_2$. Ähnliches gilt für andere Frequenzverschiebungseinrichtungen.

Es ist bekannt, daß bei der Einrichtung zur Messung der Drehgeschwindigkeit die Anordnung der optischen Bauelemente reziprok sein soll, d. h. ihre Einwirkung auf den Lichtstrahl auf dem gesamten Weg von der Lichtquelle zum Photodetektor soll gleich sein. Zwischen der Lichtquelle bzw. dem Detektor und der Lichtleitfaser befinden sich meist zwei optische Strahlteiler, zwischen denen ein Raumfilter angeordnet ist. Als Raumfilter wird häufig ein Stück einer Monomodelichtleitfaser verwendet. Probleme hinsichtlich der Reziprozität ergeben sich jedoch durch die zur Frequenzverschiebung eingesetzte Bragg-Zelle, die zwischen einem Strahlteiler und der spulenförmig angeordneten Lichtleitfaser angeordnet ist. Reziprozität ist nur dann gegeben, wenn die Lage des ein- und des ausgekoppelten Lichtstrahls genau symmetrisch zur Ausbreitungsrichtung der Schallwelle in der Bragg-Zelle ist. Dies erfordert, daß die Ein- und Auskoppelelemente (Linsen, Lichtleitfaserenden) symmetrisch angeordnet sind. Dies ist bei der Herstellung nur mit großem Aufwand zu erreichen. Selbst dann, wenn die Symmetrie bei der Herstellung erfüllt ist, kann die Symmetrie beim Betrieb verlorengehen; z. B. durch mechanische Einwirkungen oder Temperaturschwankungen.

Aufgabe der Erfindung ist es, eine Lösung anzugeben, bei der die durch die nicht vorhandene vollkommene Reziprozität verursachten Fehler nicht mehr vorhanden sind.

Die Lösung dieser Aufgabe erfolgt mit den im Anspruch 1 angegeben Mitteln. Vorteilhafte Weiterbildungen sind den abhängigen Ansprüchen zu entnehmen.

Bei der neuen Einrichtung werden Fehler, die durch die Nichtreziprozität der Einkopplung und Auskopplung in die Frequenzverschiebungseinrichtung verursacht werden, kompensiert. Dadurch erhält man für die Einrichtung zur Messung der Drehgeschwindigkeit eine hohe Meßgenauigkeit.

Die Erfindung wird anhand der Zeichnungen beispielsweise näher erläutert. Es zeigt:

Fig. 1 ein Blockschaltbild der neuen Einrichtung zur Messung der Drehgeschwindigkeit,

Fig. 2 ein Blockschaltbild einer bekannten Einrichtung zur Messung der Drehgeschwindigkeit,

Figuren 3 und 4 zwei verschiedene Anordnungen der Frequenzverschiebungseinrichtung für die neue Einrichtung zur Messung der Drehgeschwindigkeit.

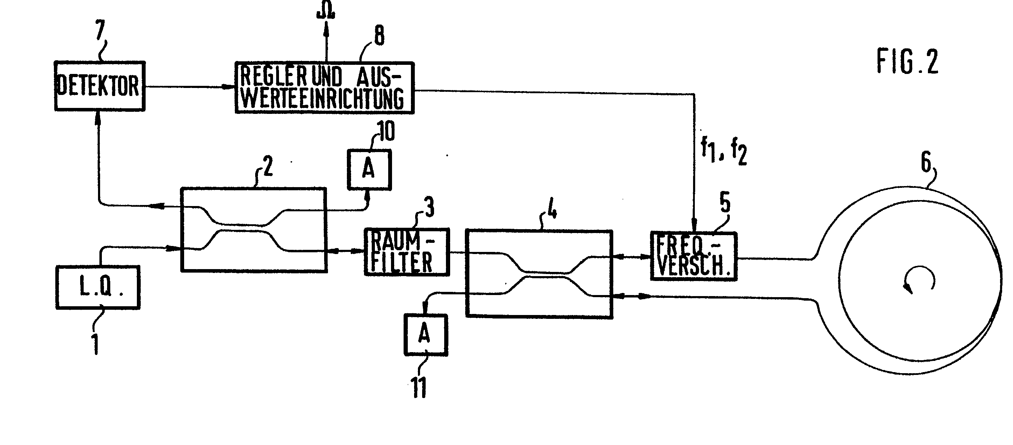

Zunächst wird anhand der Fig. 2 eine bekannte Einrichtung zur Messung der Drehgeschwindigkeit erläutert. In einer Lichtquelle 1 wird ein Lichtstrahl erzeugt. Als Lichtquelle wird vorzugsweise ein Laser verwendet. Dieser Lichtstrahl gelangt über einen ersten Strahlteiler 2 und ein Raumfilter 3 zu einem zweiten Strahlteiler 4. Im ersten Strahlteiler wird der von dem Laser 1 erzeugte Lichtstrahl in zwei Teilstrahlen aufgeteilt. Der eine Teilstrahl wird dem bereits erwähnten Raumfilter 3 zugeführt. Der andere Teilstrahl gelangt zu einem Absorber 10 und ist im folgenden nicht näher zu betrachten. Der Strahlteiler 4 teilt den ihm vom Raumfilter 3 zugeführten Lichtstrahl wiederum in zwei Teilstrahlen auf. Diese beiden Teilstrahlen werden einer spulenförmig angeordneten Lichtleitfaser 6 zugeführt. In den Lichtweg zwischen dem einen Ausgang des Strahlteilers 4 und dem einen Ende der Lichtleitfaser 6 ist eine Frequenzverschiebungseinrichtung 5 eingefügt. Als Frequenzverschiebungseinrichtung ist eine Bragg-Zelle geeignet. Die beiden von dem Strahlteiler 4 erzeugten Teilstrahlen durchlaufen die Lichtleitfaser 6 gegensinnig und gelangen nach ihrem Durchlaufen wieder zu dem Strahlteiler 4, in dem sie jetzt einander überlagert werden. Ein Teil des durch die Überlagerung überzeugten Lichtstrahls wird dem Raumfilter 3 zugeführt. Der andere Teil gelangt zu einem Absorber 11. Der Teilstrahl, der dem Raumfilter 3 zugeführt worden ist, gelangt danach zu dem ersten Strahlteiler 2. Der Strahlteiler 2 führt diesen Teilstrahl zu einem Detektor 7. Das elektrische Ausgangssignal des Detektors 7 wird einer Regel- und Auswerteeinrichtung 8 zugeführt. In dieser wird auf bekannte Weise aus der durch den Sagnac-Effekt bedingten Phasendifferenz laufen der spulenförmig angeordneten Lichtleitfaser 6 aufweisen, die Drehgeschwindigkeit ermittelt. In der Regel- und Auswerteeinrichtung 8 wird außerdem das Ansteuersignal für die Frequenzverschiebungseinrichtung erzeugt. Einzelheiten der Auswertung werden hier nicht näher erläutert, da sie aus der DE-OS 31 36 688 bekannt sind.

Wie bereits erwähnt, können zur Erzeugung einer gewünschten Frequenzverschiebung zwei hintereinander angeordnete Bragg-Zellen verwendet werden, die dann mit den Frequenzen $f_1$ und $f_2$ angesteuert werden. Stattdessen ist es auch möglich, nur eine Bragg-Zelle vorzusehen, die dann gleichzeitig mit Signalen der Frequenz $f_1$ und $f_2$ angesteuert wird. Beide Lösungen sind in der DE-OS 33 40 809 beschrieben.

Es hat sich gezeigt, daß diese Anordnung sehr empfindlich ist hinsichtlich der Anordnung der Bragg-Zelle und der Ein- und Auskoppelmittel für den Lichtstrahl in die Bragg-Zelle. Einerseits ist es schwierig, diese Ein- und Auskoppelmittel bei der Herstellung exakt zu justieren. Andererseits verursachen Einwirkungen, z. B. Druck- oder Temperaturschwankungen, Abweichungen von der erforderlichen Symmetrie.

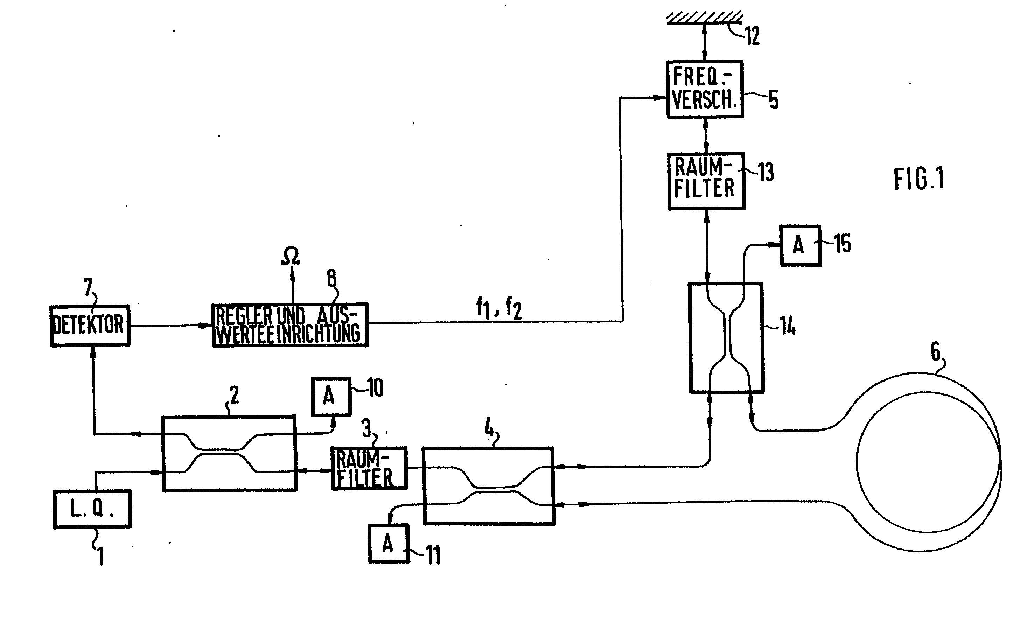

Anhand der Fig. 1 wird die neue Einrichtung zur Messung der Drehzahlgeschwindigkeit beschrieben, bei der diese Nachteile nicht mehr vorhanden sind. Die Anordnung nach Fig. 1 stimmt bis zu dem zweiten Strahlteiler 4 und der Regel- und Auswerteeinrichtung 8 mit der Anordnung nach Fig. 2 überein. Gleiche Bauelemente sind mit den gleichen Bezugszeichen versehen. Außerdem ist auch hier wieder die spulenförmig angeordnete Lichtleitfaser 6 vorhanden. Anstatt jedoch den Teilstrahl, der von dem zweiten Strahlteiler 4 ausgeht, direkt der Frequenzverschiebungseinrichtung 5 (Fig. 2) zuzuführen, wird bei der neuen Anordnung dieser Teilstrahl zunächst einem weiteren Strahlteiler 14 zugeführt. Dieser Strahlteiler 14 teilt den ihm zugeführten Teilstrahl in zwei weitere Teilstrahlen auf. Der eine gelangt zu einem Absorber 15 und kann für die weitere Betrachtung vernachlässigt werden. Der andere gelangt über ein Raumfilter 13 zu der Frequenzverschiebungseinrichtung 5. Die Frequenzverschiebungseinrichtung 5 an sich ist gleich ausgeführt wie die Frequenzverschiebungseinrichtung 5 bei der Anordnung nach Fig. 2. Sie wird mit zwei Signalen, die die Frequenzen $f_1$ und $f_2$ haben, von der Auswerte- und Regeleinrichtung 8 angesteuert. Nach der Frequenzverschiebung in der Frequenzverschiebungseinrichtung 5 gelangt der Lichtstrahl über eine (nicht dargestellte) Abbildungsoptik auf einen Spiegel 12. Dieser Lichtstrahl wird an dem Spiegel 12 reflektiert und passiert die Frequenzverschiebungseinrichtung 5 auf demselben Weg in entgegengesetzter Richtung ein zweites Mal. Danach gelangt er über das Raumfilter 13 zu dem dritten Strahlteiler 14 und wird von diesem in das eine Ende der Lichtleitfaser 6 eingekoppelt. Bei dieser Anordnung können zwar, bedingt durch die Unsymmetrie der Ein- und Auskoppelmittel, in der Frequenzverschiebungseinrichtung 5 ebenfalls Fehler auftreten; diese werden jedoch dadurch kompensiert, daß der Lichtstrahl die Frequenzverschiebungseinrichtung 5 und das Raumfilter 13 einmal in Hin- und einmal in Rückrichtung passiert. Besonders wichtig hierbei ist es, daß die beiden Teilstrahlen, die die spulenförmig angeordnete Lichtleitfaser gegenseitig durchlaufen, die Frequenzverschiebungseinrichtung und das Raumfilter auf genau demselben Weg erreichen und durchlaufen. Dadurch wird es möglich, daß sowohl Justierfehler bei der Herstellung dieser Einrichtung als auch Abweichungen von der Symmetrie während des Betriebs unschädlich sind.

Statt den Lichtstrahl nach dem Passieren der Frequenzverschiebungseinrichtung 5 auf einem Spiegel 12 abzubilden, ist es auch möglich, das akustoptische Medium der Bragg-Zelle auf der dem Lichteintritt gegenüberliegenden Seite direkt mit einem Reflexionsbelag abzuschließen. Bei dieser Anordnung ist es notwendig, daß die Schallwelle parallel zur Ebene dieses Reflexionsbelages verläuft. Dies wird praktisch dadurch erreicht, daß der Schallwandler auf einer Seitenfläche angebracht ist, die mit der Spiegelebene einen rechten Winkel bildet. Wegen der Spiegelreflexion braucht in diesem Fall der Wechselwirkungsbereich mit der akustischen Welle nur halb so lang zu sein wie in einer herkömmlichen Transmissions-Bragg-Zelle. Der Frequenzversatz ist hier gleich der Frequenz, mit der die Bragg-Zelle angesteuert wird.

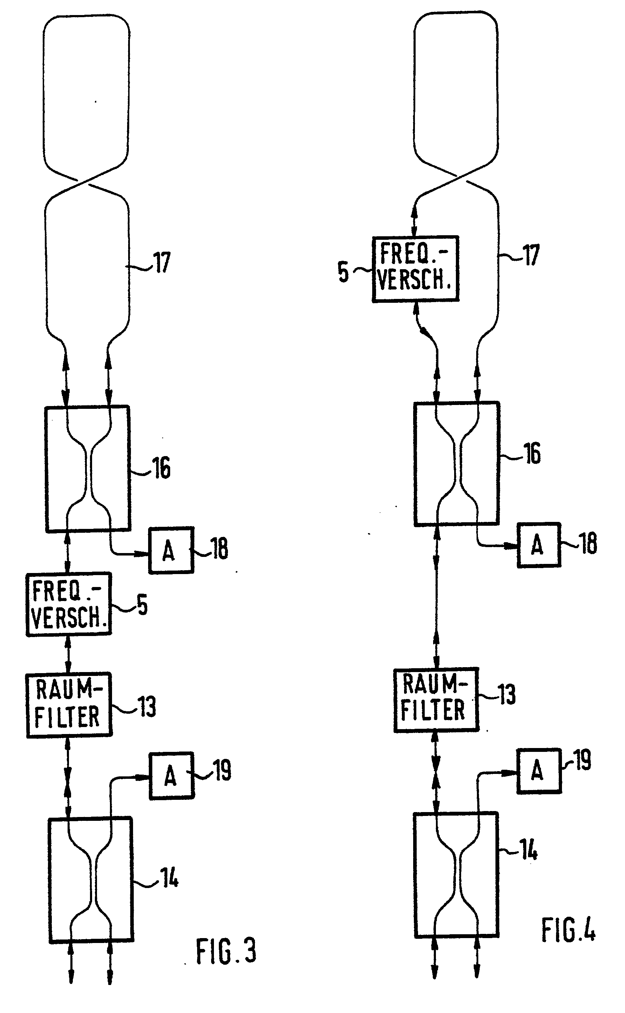

Weitere Anordnungen, bei denen ebenfalls kein Spiegel vorgesehen ist, werden anhand der Figuren 3 und 4 erläutert. Lösungen, bei denen kein separater Spiegel erforderlich ist, sind besonders für die Realisierung in der Technik der integrierten Optik geeignet.

Bei der Anordnung nach Fig. 3 ist wie bei der Anordnung nach Fig. 1 der dritte Strahlteiler 14 vorgesehen. Ebenfalls wie bei der Anordnung nach Fig. 1 sind dem Strahlteiler 14 das Raumfilter 13 und die Frequenzverschiebungseinrichtung 5 nachgeschaltet. Anstatt jedoch den Lichtstrahl nach dem Passieren der Frequenzverschiebungseinrichtung 5 auf einen Spiegel zu richten, gelangt hier der Lichtstrahl auf einen vierten Strahlteiler 16. Der Ausgangslichtstrahl des vierten Strahlteilers 16 gelangt auch zu einem Lichtweg 17 und durchläuft diesen. Der Lichtstrahl wird nach dem Durchlaufen des Lichtwegs wieder dem Strahlteiler 16 zugeführt. Die beiden Enden des Lichtwegs 17 sind mit unterschiedlichen Ein- und Ausgängen des Strahlteilers 16 verbunden. An den verbleibenden vierten Ein- und Ausgang des Strahlteilers 16 ist ein Absorber 18 angeschlossen. Der Lichtweg ist so angeordnet, daß er ungefähr die Form einer 8 hat. Dadurch erreicht man, daß die beiden von dem Lichtweg eingeschlossenen Flächen gegensinnig durchlaufen werden. Über den Ein- und Ausgang des vierten Strahlteilers, über den der Lichtstrahl von der Frequenzverschiebungseinrichtung dem vierten Strahlteiler zugeführt wurde, wird der Lichtstrahl nach dem Durchlaufen des Lichtwegs 17 wieder zu der Frequenzverschiebungseinrichtung geleitet und durchläuft diese auf demselben Weg, wie es für den vom Raumfilter 13 zu der Frequenzverschiebungseinrichtung 15 gelangenden Lichtstrahl der Fall war.

Die Anordnung nach Fig. 4 unterscheidet sich von der Anordnung nach Fig. 3 dadurch, daß die Frequenzverschiebungseinrichtung nicht zwischen Raumfilter 13 und dem vierten Strahlteiler 16 angeordnet ist, sondern in den Lichtweg 17 eingefügt ist.

Bei den Anordnungen sind in die Lichtwege häufig Richtungspfeile für die Lichtstrahlen in beiden Richtungen eingezeichnet. Dies ist deshalb der Fall, weil sich die Lichtstrahlen jeweils auch in beiden Richtungen ausbreiten. Bei der Anordnung nach Fig. 1 beispielsweise gelangt der Teilstrahl, der von dem zweiten Strahlteiler 4 ausgeht, zunächst zu dem dritten Strahlteiler 14 und über diesen zu dem Raumfilter 13 und danach zu der Frequenzverschiebungseinrichtung 5. Nach dem Passieren der Frequenzverschiebungseinrichtung 5 wird er am Spiegel 12 reflektiert und gelangt wiederum über die Frequenzverschiebungseinrichtung 5 und das Raumfilter 13 zu dem Strahlteiler 14, und der Strahlteiler 14 koppelt diesen Teilstrahl in die Lichtleitfaser 6 ein. Der andere Teilstrahl, der von dem zweiten Strahlteiler 4 ausgeht, durchläuft die Lichtleitfaser 6 in entgegengesetzter Richtung, gelangt über den dritten Strahlteiler 14 ebenfalls zu dem Raumfilter 13 und der Frequenzverschiebungseinrichtung 5 und wird wieder, ähnlich wie der andere Teilstrahl, am Spiegel 12 reflektiert und danach wieder zu dem dritten Strahlteiler 14 zurückgeführt. Der dritte Strahlteiler 14 leitet·diesen Teilstrahl dann dem zweiten Strahlteiler 4 zu.

Die erwähnten Strahlteiler sind vorzugsweise als optische Richtkoppler ausgebildet.

## Patentansprüche

1. Einrichtung zur Messung der Drehgeschwindigkeit mit einer einen Lichtstrahl erzeugenden Lichtquelle (1), bei der dieser Lichtstrahl über einen ersten Strahlteiler (2) zu einem zweiten Strahlteiler (4) geleitet wird, bei der dieser Lichtstrahl in dem zweiten Strahlteiler in zwei Teilstrahlen aufgeteilt wird, welche einen ersten Lichtweg (6), der eine Fläche umschließt, in entgegengesetzten Richtungen durchlaufen, bei der die beiden Teilstrahlen nach Durchlaufen des ersten Lichtwegs (6) in dem zweiten Strahlteiler (4) einander überlagert werden, bei der zumindest ein Teil des durch die Überlagerung erzeugten Lichtstrahls durch den zweiten Strahlteiler (4) einem Detektor (7) zugeführt wird, dessen Ausgangssignal in einer Regel- und Auswerteeinrichtung (8) ausgewertet wird, bei dem zumindest ein Teilstrahl vor seinem Einkoppeln in den ersten Lichtweg (6) in mindestens einer Frequenzverschiebungseinrichtung (5) frequenzverschoben wird, und bei dem in der Regel- und Auswerteeinrichtung (8) die Drehgeschwindigkeit aus der durch den Sagnac-Effekt bedingten Phasendifferenz zwischen den beiden Teilstrahlen nach dem Durchlaufen des ersten Lichtwegs (6) ermittelt wird, dadurch gekennzeichnet, daß zwischen dem zweiten Strahlteiler (4) und einem Ende des ersten Lichtwegs (6) ein dritter Strahlteiler (14) eingefügt ist, daß beide Teilstrahlen, die den ersten Lichtweg (6) in entgegengesetzten Richtungen durchlaufen, ausgehend von einem Ausgang des dritten Strahlteilers (14) auf einem zweiten Lichtweg zum selben Ausgang dieses dritten Strahlteilers (14) zurückgeführt werden, daß die Frequenzverschiebungseinrichtung (5) in den zweiten Lichtweg eingeführt ist, daß zwischen dem dritten Strahlteiler (14) und der Frequenzverschiebungseinrichtung (5) ein Raumfilter (13) eingefügt ist und daß Mittel (12) vorgesehen sind, die sicherstellen, daß die beiden Teilstrahlen, die den ersten Lichtweg (6) in entgegengesetzten Richtungen durchlaufen, das Raumfilter und die Frequenzverschiebungseinrichtung auf demselben Weg durchlaufen.

2. Einrichtung zur Messung der Drehgeschwindigkeit nach Anspruch 1, dadurch gekennzeichnet, daß die Mittel ein Spiegel (12) sind, der den Lichtstrahl nach dem Durchlaufen der Frequenzverschiebungseinrichtung (5) wieder zur Frequenzverschiebungseinrichtung (5) zurückreflektiert.

3. Einrichtung zur Messung der Drehgeschwindigkeit nach Anspruch 2, dadurch gekennzeichnet, daß der Spiegel (12) direkt auf der Frequenzverschiebungseinrichtung (5) angeordnet ist.

4. Einrichtung zur Messung der Drehgeschwindigkeit nach Anspruch 1, dadurch gekennzeichnet, daß die Mittel aus einem vierten Strahlteiler (16) und einem weiteren Lichtweg (17), der zwei Flächen umschließt und ungefähr die Form einer "acht" hat, besteht.

5. Einrichtung zur Messung der Drehgeschwindigkeit nach Anspruch 4, dadurch gekennzeichnet, daß der vierte Strahlteiler (16) und der weitere Lichtweg (17) der Frequenzverschiebungseinrichtung nachgeschaltet (5) sind.

6. Einrichtung zur Messung der Drehgeschwindigkeit nach Anspruch 4, dadurch gekennzeichnet, daß der vierte Strahlteiler (16) dem dritten Strahlteiler (14) nachgeschaltet ist und daß die Frequenzverschiebungseinrichtung (5) in den weiteren Lichtweg (17) eingefügt ist.

7. Einrichtung zur Messung der Drehgeschwindigkeit nach einem der vorherigen Ansprüche, dadurch gekennzeichnet, daß zwischen dem ersten (2) und dem zweiten (4) Strahlteiler ein optisches Raumfilter (3) eingefügt ist.

## Claims

1. Rotation rate measuring device comprising a light source (1) generating a light beam, wherein said light beam is passed through a first beam splitter (2) to a second beam splitter (4) for splitting the light beam into two beam portions which travel in opposite directions over a first light path (6) enclosing an area, wherein, after passage through the first light path (6), the two beam portions are combined in the second beam splitter (4), wherein at least a portion of the light beam produced by the combination passes from the second beam splitter (4) to a detector (7) whose output is evaluated in a control and evaluation unit (8), wherein at least one of the beam portions is frequency-shifted in a frequency shifter (5) before being coupled into the first light path (6), and wherein the rotation rate is determined in the control and evaluation unit (8) from the Sagnac phase difference between the two beam portions after passage through the first light path (6), characterized in that a third beam splitter (14) is inserted between the second beam splitter (4) and one end of the first light path (6), that at an output of the third beam splitter (14), both beam portions which travel over the first light path (6) in opposite directions enter a second light path and are returned over said second light path to the same output of the third beam splitter (14), that the frequency shifter (5) is inserted in the second light path, that a spatial filter (13) is inserted between the third beam splitter (14) and the frequency shifter (5), and that means (12) are provided which ensure that two beam portions travelling over the first light path (6) in opposite directions pass through the spatial filter and the frequency shifter by the same path.

2. A rotation rate measuring device as claimed in claim 1, characterized in that the means are a mirror (12) which reflects the light beam emerging from the frequency shifter (5) back to the frequency shifter (5).

3. A rotation rate measuring device as claimed in claim 2, characterized in that the mirror (12) is disposed directly on the fequency shifter (5).

4. A rotation rate measuring device as claimed in claim 1, characterized in that the means consist of a fourth beam splitter (16) and an additional light path (17) which encloses two areas and has approximately the shape of the numeral 8.

5. A rotation rate measuring device as claimed in claim 4, characterized in that the fourth beam splitter (16) and the additional light path (17) follow the frequency shifter (5).

6. A rotation rate measuring device as claimed in claim 4, characterized in that the fourth beam splitter (16) follows the third beam splitter (14), and that the frequency shifter (5) is inserted in the additional light path (17).

7. A rotation rate measuring device as claimed in any one of the preceding claims, characterized in that an optical spatial filter (3) is inserted between the first beam splitter (2) and the second beam splitter (4).

**Revendications**

1. Dispositif de mesure de vitesse de rotation pourvu d'une source lumineuse (1) produisant un rayon lumineux, dans lequel ce rayon lumineux est transmis par l'intermédiaire d'un premier diviseur de rayonnement 2 à un second diviseur de rayonnement 4, dans lequel ce rayon lumineux est divisé dans le second diviseur de rayonnement en deux rayons partiels, qui se propagent dans une première fibre optique (6), qui entoure une surface, dans des directions opposées, dans lesquelles les deux rayons partiels, après franchissement de la première fibre optique (6), sont combinés mutuellement dans le second diviseur de rayonnement (4), dans lequel au moins une partie du rayon lumineux produit par cette combinaison est appliquée par le second diviseur de rayonnement (4) à un détecteur (7), dont le signal de sortie est évalué dans un dispositif de régulation et évaluation (8), dans lequel au moins un rayon lumineux, avant son application à la première fibre optique (6), est décalé en fréquence dans au moins un dispositif de décalage de fréquence (5), et dans lequel, dans le dispositif de régulation et d'évaluation (8), la vitesse de rotation est déterminée à partir de la différence de phase, produite par l'effet Sagnac, entre les deux rayons partiels après le franchissement de la première fibre optique (6), caractérisé en ce qu'un troisième diviseur de rayonnement (14) est interposé entre le second diviseur de rayonnement (4) et une des extrémités de la première fibre optique (6), en ce que les deux rayons partiels, qui ont franchi la première fibre optique (6) dans des directions opposées, sont renvoyées, à partir d'une sortie du troisième diviseur de rayonnement (14) et par l'intermédiaire d'une seconde fibre optique à la même sortie de ce troisième diviseur de rayonnement (14), en ce que le dispositif de décalage de fréquence (5) est interposé dans la seconde fibre optique, en ce qu'il est prévu entre le troisième diviseur de rayonnement (14) et le dispositif de décalage de fréquence (5) un filtre spatial (13) et en ce qu'il est prévu des moyens (12) qui font en sorte que les deux rayons partiels qui franchissent la première fibre optique (6) dans des directions opposées parcourent le filtre spatial et le dispositif de décalage de fréquence en suivant le même trajet.

2. Dispositif de mesure de vitesse de rotation selon la revendication 1, caractérisé en ce que les moyens précités sont constitués par un miroir (12), qui réfléchit le rayon lumineux ayant passé dans le dispositif de décalage de fréquence (5) à nouveau en direction du dispositif de décalage de fréquence (5).

3. Dispositif de mesure de vitesse de rotation selon la revendication 2, caractérisé en ce que le miroir (12) est disposé directement sur le dispositif de décalage de fréquence (5).

4. Dispositif de mesure de vitesse de rotation selon la revendication 1, caractérisé en ce que les moyens précités se composent d'un quatrième diviseur de rayonnement (16) et d'une autre fibre optique (17), qui entoure deux surfaces et qui a approximativement la forme d'un "huit".

5. Dispositif de mesure de vitesse de rotation selon la revendication 4, caractérisé en ce que le quatrième diviseur de rayonnement (16) et l'autre fibre optique (17) sont disposés après le dispositif de décalage de fréquence (5).

6. Dispositif de mesure de vitesse de rotation selon la revendication 4, caractérisé en ce que le quatrième diviseur de rayonnement (16) est disposé après le troisième diviseur de rayonnement (14) et en ce que le dispositif de décalage de fréquence (5) est interposé dans l'autre fibre optique (17).

7. Dispositif de mesure de vitesse de rotation selon une des revendications précédentes, caractérisé en ce qu'un filtre spatial optique (3) est interposé entre le premier diviseur de rayonnement (2) et le second diviseur de rayonnement (4).

FIG.1

L.Q. — 1

DETEKTOR — 7

REGLER UND AUS- WERTEEINRICHTUNG — 8

Ω

f₁, f₂

A — 10

A — 11

RAUM- FILTER — 3

2

4

FREQ.- VERSCH. — 5

RAUM- FILTER — 13

12

A — 15

14

6

EP 0 206 223 B1

FIG.2

EP 0 206 223 B1

FIG.3

FIG.4